# EUROPEAN PATENT SPECIFICATION

(11) **EP 0 305 127 B1**
(45) Date of publication and mention of the grant of the patent: **10.11.1993**
(21) Application number: 88307730.7
(22) Date of filing: 19.08.1988
(51) Int. Cl.: H04N 7/137, H04N 1/41

(54) **Video signal compressive encoding/decoding**
Kompressionskodierung/-Dekodierung eines Videosignals
Codage/décodage par compression d'un signal vidéo

(30) Priority: 22.08.1987 JP 208957/87
(43) Date of publication of application: 01.03.1989
(73) Proprietor: SONY CORPORATION, Tokyo 141 (JP)
(72) Inventor: Kondo, Tetsujiro Patents Division, Shinagawa-ku§Tokyo 141 (JP)
(74) Representative: Cotter, Ivan John

(56) References cited:
- FR-A- 2 320 017
- GB-A- 1 537 738
- GB-A- 2 083 982

## Description

This invention relates to video signal compressive encoding/decoding methods and apparatus.

When transmitting a video signal, it is known to compress the amount of transmission data relative to the amount of original data. An exemplary method for performing such compression is a subsampling technique which reduces a sampling frequency by thinning out the individual pixel samples of a digitised original video signal at predetermined intervals. More specifically, as disclosed in Japanese Patent Application Publication No. 57(1982) - 78290, the individual pixel samples of the video signal are so thinned out that the sampling rate is reduced by one-half, the data of the non-thinned out pixel samples are transmitted, and a flag indicating the position of the non-thinned out sample to be used for interpolation on the receiving side is also transmitted with regard to the thinned sample.

One problem with such subsampling process in which the subsampling pattern is not changed is that, in a contour or the like of a subject image including high frequency components, the reproduced image exhibits conspicuous quality deterioration. Particularly when the subsampling rate is lowered, such image quality deterioration is extremely great.

For the purpose of solving the above-mentioned problems, the present applicants have previously proposed an improved method which divides an image of one frame into a plurality of segmental blocks, then selects a suitable one out of a plurality of prepared sampling patterns, and transmits, together with the pixel sample to be transmitted, an identification code representing the selected sampling pattern. However, in this method, the number of kinds of prepared sampling patterns must be limited for suppressing redundancy derived from the identification code, and consequently the method is not suitable for processing every image. Moreover, this method has the disadvantage that the segmentation operation may bring about block distortion.

United Kingdom Patent Application Publication No. GB-A-2 083 982 discloses a similar arrangement in which only alternate pixel samples are transmitted. Each non-transmitted sample is represented by a control code indicating a pair of adjacent transmitted samples from which that non-transmitted sample should be reconstructed.

This invention provides a method for compressive encoding of a video signal, the method comprising the steps of: receiving a digital video signal represented by respective pixel samples each having a predetermined number of bits; determining respective elementary pixel samples at a predetermined rate; predicting values of respective ones of subject pixel samples other than the elementary pixel samples; detecting respective predictive errors of the predicted values from the present values of the subject pixel samples; and transmitting the present values of the elementary pixel samples in an encoded video signal; the method being characterised by the steps of: comparing the respective predictive errors with a threshold value; setting respective flags according to whether the predictive errors are determined to be greater than the threshold value or less than or equal to the threshold value; and transmitting in the encoded video signal the present values of the subject pixel samples for which the respective predictive errors are greater than the threshold value, and a compressed data signal for each subject pixel sample for which the respective predictive error is less than or equal to the threshold value, each of said compressed data signals including at least the said respective flag.

Viewed from a second aspect this invention provides a method of decoding a video signal encoded by a method as defined above, comprising the steps of: receiving the transmitted encoded video signal; predicting a subject pixel sample value for each of said compressed data signals; interpolating the respective subject pixels corresponding to the respective compressed data signals, with the respective subject pixel sample values predicted in the step of predicting; and outputting a decoded video signal including the present values of the elementary pixel samples, the present values of the respective subject pixel samples included in the transmitted encoded video signal, and the respective subject pixel samples interpolated in the step of interpolating.

Viewed from a third aspect this invention provides apparatus for compressive encoding of a video signal, the apparatus comprising: means for receiving a digital video signal represented by respective pixel samples each having a predetermined number of bits; means for determining respective elementary pixel samples at a predetermined rate; means for predicting values of respective ones of subject pixel samples other than the elementary pixel samples; means for detecting respective predictive errors of the predicted values from the present values of the subject pixel samples; and means for transmitting the present values of the elementary pixel samples in an encoded video signal; the apparatus being characterised by: means for comparing the respective predictive errors with a threshold value; means for setting respective flags according to whether the predictive errors are determined to be greater than the threshold value or less than or equal to the threshold value; and means for transmitting in the encoded video signal the present values of the subject pixel samples for which the respective predictive errors are greater than the threshold value, and a compressed data signal for each subject pixel sample for which the respective predictive error is less than or equal to the threshold value, each of said compressed data signals including at least the said respective flag.

Viewed from a fourth aspect this invention provides apparatus for decoding a video signal encoded by apparatus as defined above, the decoding apparatus comprising: means for receiving the transmitted encoded video signal; means for predicting a subject pixel sample value for each of said compressed data signals; means for interpolating the respective subject pixels corresponding to the respective compressed data signals, with the respective subject pixel sample values predicted in said means for predicting; and means for outputting a decoded video signal including the present values of the elementary pixel samples, the present values of the respective subject pixel samples included in the transmitted encoded video signal, and the respective subject pixel samples interpolated in said means for interpolating.

Preferred embodiments of the invention described hereinbelow provide a video signal compressive encoding/decoding method and apparatus which is capable of solving the known problems mentioned above, which minimises quality deterioration of the reproduced image, which can diminish the quality deterioration experienced in the case of an image reproduced on a block basis, which is capable of accomplishing real-time processing adequate for a moving image, which can maintain substantially fixed the unitary amount of generated information to be processed, which requires no large-capacity buffer memory, and which can reduce the amount of generated information that may otherwise be increased by a noise component.

In the preferred method and apparatus, a video signal is compressed adaptively in accordance with the values of individual pixels.

The invention will now be further described, by way of illustrative and non-limiting example, with reference to the accompanying drawings, in which:
Figure 1 schematically illustrates a video signal that may be processed in accordance with a compressive encoding method embodying the invention;
Figure 2 is a schematic block diagram of an exemplary video signal compressive encoding apparatus embodying the invention;
Figure 3 is a block diagram of an exemplary subsampling encoder employed in the video signal compressive encoding apparatus;
Figure 4 is a block diagram of an exemplary threshold determination circuit employed in the subsampling encoder;
Figure 5 is a block diagram of an exemplary sampling decoder for a video signal compressively encoded by the subsampling encoder shown in Figure 3;
Figure 6 is a block diagram of an exemplary interpolation circuit employed in the sampling decoder shown in Figure 5;
Figure 7 is a block diagram of an exemplary nonlinear filter shown in Figure 2;
Figure 8 is a graph schematically illustrating the operation of the nonlinear filter shown in Figure 7;
Figure 9 is a block diagram of an exemplary subsampling encoder employed in another video signal compressive encoding apparatus embodying the invention;
Figure 10 is a block diagram of an exemplary subsampling decoder employed in another video signal compressive decoding apparatus embodying the invention;
Figure 11 is a flow chart of a video signal compressive encoding algorithm executed in the subsampling encoder shown in Figure 9; and
Figure 12 is a flow chart of a decoding algorithm executed in the subsampling decoder shown in Figure 10.

A video signal compressive encoding/decoding method embodying the invention and an apparatus for carrying out such method are described in detail below with reference to the accompanying drawings. First, the video signal compressive encoding method will be described.

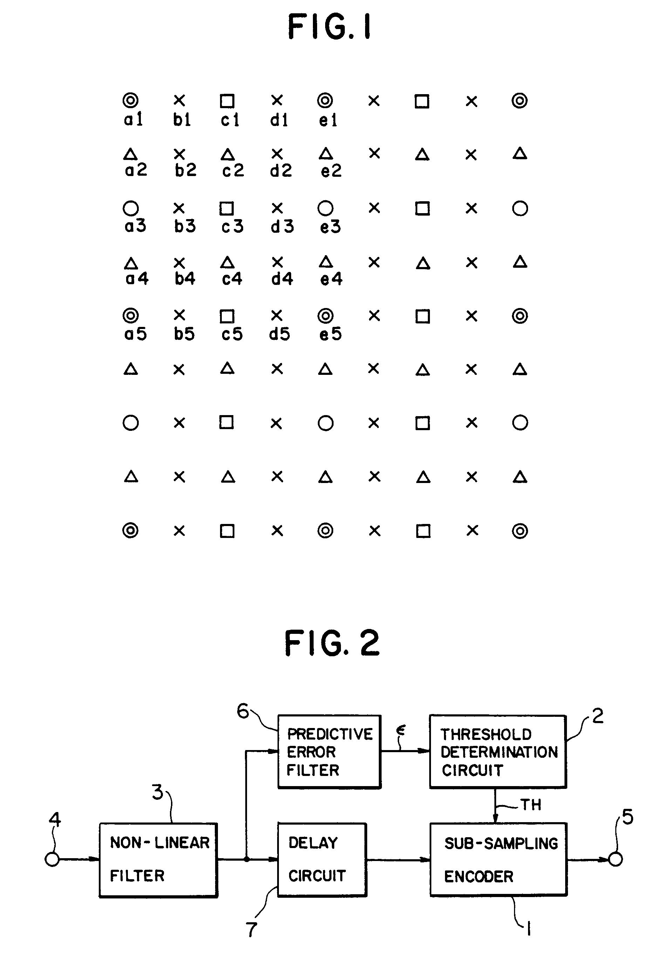

In Figure 1, individual pixel samples existing in partial regions of one field of an input digital video signal are represented by symbols Ⓞ, ○, □, △ and X. The horizontal spacing between the pixel samples corresponds to the sampling period and the vertical spacing between the pixel samples corresponds to the line interval. The sign Ⓞ denotes so-called elementary pixel samples occurring in one out of every four lines, and, in such lines, for one out of every four pixels, whereby one out of each 16 pixel samples is an elementary pixel sample. In the present compressive encoding method, the elementary pixel samples, included at a rate of 1 per 16 pixel samples, are entirely transmitted without being thinned out.

The other ("non-elementary" or "subject") pixel samples, represented by the signs ○, □, △ and X, are adaptively thinned out. That is, in the following sequence, the value of each non-elementary pixel sample is compared with a predicted value thereof based on the value of an associated peripheral reference pixel sample or samples, and, if the predicted residue ε is smaller than a threshold value TH, the subject pixel sample is not transmitted (i.e. is "thinned out"), but, instead, an identification code indicating the thinning-out of such subject pixel sample is transmitted. If, on the other hand, the predicted residue ε is in excess of the threshold value TH, the subject pixel sample is transmitted without being thinned out.

The threshold value TH is determined by taking into consideration the image quality deterioration that may be induced in the reproduced image during a decoding operation (described below) in which the value of the thinned-out pixel sample is interpolated using one or more peripheral reference pixel samples associated with the thinned-out pixel sample.

For example, the value of a non-elementary pixel sample a3 (Figure 1) denoted by ○ is compared with the average value 1/2 (a1 + a5) of two peripheral elementary pixel samples a1 and a5 at positions spaced apart by two lines upwardly and downwardly, respectively, in the same field. Similarly, the value of a non-elementary pixel sample e3 is compared with the average value of two peripheral elementary pixel samples e1 and e5.

The value of a pixel sample c1 denoted by □ is compared with the average value 1/2 (a1 + e1) of two peripheral pixel samples a1 and e1 at positions spaced apart by two pixel samples to the left and to the right, respectively, on the same line. Similarly, the values of non-elementary pixel samples c3 and c5 are compared with the average values of peripheral pixel samples a3 and e3, and a5 and e5, respectively.

The value of a pixel sample a2 denoted by △ is compared with the average value 1/2 (a1 + a3) of two peripheral pixel samples a1 and a3 at positions spaced apart by one line upwardly and downwardly, respectively, in the same field. Similarly, the values of non-elementary pixel samples c2, e2, a4, c4 and e4 are compared with the average values of peripheral pixel samples c1 and c3, e1 and e3, a3 and a5, c3 and c5, and e3 and e5, respectively.

The value of the pixel sample b1 denoted by x is compared with the average value 1/2 (a1 + c1) of two peripheral pixel samples a1 and c1 at positions spaced apart by one pixel sample to the left and to the right, respectively, on the same line. Similarly, the values of non-elementary pixel samples b2, b3, b4, b5, d1, d2, d3, d4 and d5 are compared with the average values of peripheral pixel samples a2 and c2, a3 and c3, a4 and c4, a5 and c5, c1 and e1, c2 and e2, c3 and e3, C4 and e4, and c5 and e5, respectively.

When the pixel samples have been adaptively thinned out as described above, the amount of output data depends upon the content of the image. Accordingly, if the video signal thus processed by compressive encoding is recorded and reproduced by means of a tape recorder or the like, a variation occurs in the amount of data record per track. On the other hand, if the data rate is maintained constant in a recording mode, the unitary length is thereby changed, which consequently complicates editing and so forth.

For the purpose of eliminating the disadvantage described in the preceding paragraph, buffering can be carried out to maintain constant the amount of data recorded per track. In such embodiment of the compressive encoding method, the number of pixel samples to be thinned out is changed by varying the threshold value TH of a subsampling encoder 1 (shown in Figure 2) in accordance with the content of the video signal per field.

That is, the number of pixel samples thinned out becomes greater it the threshold value TH is increased, consequently reducing the amount of transmitted information. On the other hand, the number of pixel samples thinned out becomes smaller if the threshold value TH is decreased, consequently increasing the amount of transmitted information. Therefore, buffering is accomplished by controlling the threshold value TH.

As shown in Figure 2, a video signal compressive encoding apparatus embodying the invention, for carrying out a method as described above, comprises a subsampling encoder 1. So that the threshold value TH received by the subsampling encoder 1 is adaptively changed in accordance with the content of the input image, a threshold determination circuit 2 is provided. To prevent failure to attain a desired compression rate due to some noise component included in the input video signal, a nonlinear filter 3 is provided for removing such noise component. Accordingly, the compressive encoding apparatus comprises, as shown in Figure 1: an input terminal 4 supplied with a digital video signal of which each pixel sample is quantised into 8 bits at a sampling frequency of 13.5 MHz; the nonlinear filter 3, which is connected to the input terminal 4; the subsampling encoder 1, which is supplied with the filtered digital video signal from which noise has been removed in the nonlinear filter 3; an output terminal 5 at which a compressed video signal encoded by the subsampling encoder 1 is available; a predictive error filter 6 constructed partially in the same manner as the subsampling encoder 1 and supplied with the noise-removed digital video signal from the nonlinear filter 3; the threshold determination circuit 2 for deciding the threshold value TH of the subsampling encoder 1 adaptively in accordance with the predictive error ε outputted from the predictive error filter 6; and a delay circuit 7 inserted between the nonlinear filter 3 and the subsampling encoder 1. The delay circuit 7 includes a field memory and so forth to compensate for the processing times of the predictive error filter 6 and the threshold determination circuit 2.

Should the threshold value TH of the subsampling encoder 1 not need to be changed adaptively, the predictive error filter 6, threshold determination circuit 2, and delay circuit 7 may be omitted from the apparatus shown in Figure 2.

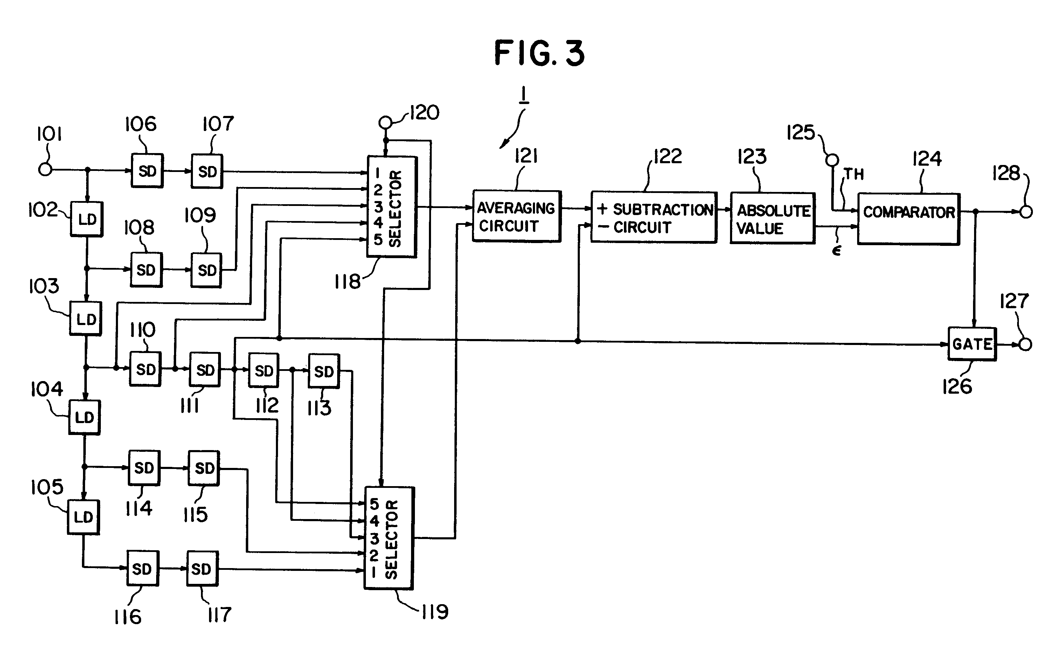

The specific construction of the individual circuit blocks of the video signal compressive encoding apparatus shown in Figure 2 will now be described in sequence. First, the subsampling encoder 1 will be described with reference to Figure 3.

Referring to Figure 3, a digital video signal is fed via the delay circuit 7 to an input terminal 101 of the subsampling encoder 1. The terminal 101 is connected to line delay ("LD") circuits 102, 103, 104 and 105 arranged in a cascade connection. Sample delay ("SD") circuits 106 and 107 are connected in series to the input terminal 101. SD circuits 108 and 109 are connected in series to the output side of the LD circuit 102, and SD circuits 110, 111, 112 and 113 are connected in series to the output side of the LD circuit 103. SD circuits 114 and 115 are connected in series to the output side of the LD circuit 104, and SD circuits 116 and 117 are connected in series to the output side of the LD circuit 105. Each of the LD circuits 102, 103, 104 and 105 has a delay time corresponding to one horizontal scanning interval, and each of the SD circuits 106 to 117 has a delay time corresponding to one sampling interval. The sample data of a plurality of pixels included in a predetermined two-dimensional area of a television image can be extracted simultaneously by a combination of the LD circuits 102 to 105 and the SD circuits 106 to 117.

The output side of the SD circuit 111 corresponds to a subject pixel sample out of those extracted simultaneously.

Each of two selectors 118 and 119 has first to fifth input terminals and, in response to a selection signal received from a terminal 120 synchronously with a sampling clock pulse, selectively provides at an output terminal thereof one of the input data fed to the five input terminals.

Although no detailed explanation is necessary with regard to this stage, it will be appreciated that the selection signal should be generated so as to ensure execution of the selection operation described below in accordance with an appropriate timing generator circuit.

The first input terminal of the selector 118 is supplied with the output data of the SD circuit 107, and the first input terminal of the selector 119 is supplied with the output data of the SD circuit 117. Accordingly, if the subject pixel sample is any one denoted by ○, the input data supplied to the respective first input terminals of the selectors 118 and 119 are selected as peripheral reference pixel samples. The second input terminals of the selectors 118 and 119 are supplied, respectively, with the output data of the SD circuits 109 and 115. Accordingly, if the subject pixel sample is any one denoted by △, the input data supplied to the respective second input terminals of the selectors 118 and 119 are selected as peripheral reference pixel samples. The third input terminals of the selectors 118 and 119 are supplied with the output data of the LD circuit 103 and the SD circuit 113, respectively. Accordingly, if the subject pixel sample is any one denoted by □, the input data supplied to the respective third input terminals of the selectors 118 and 119 are selected as reference pixel samples. The fourth input terminals of the selectors 118 and 119 are supplied with the output data of the SD circuits 110 and 112, respectively. Accordingly, if the subject pixel sample is any one denoted by X, the input data supplied to the respective fourth input terminals of the selectors 118 and 119 are selected as peripheral reference pixel samples. The fifth input terminals of the selectors 118 and 119 are both supplied with the output data of the SD circuit 111. If the subject pixel sample is any one denoted by Ⓞ, both the selectors 118 and 119 select the elementary pixel sample directly.

The output data of the selectors 118 and 119 are supplied to an averaging circuit 121, which generates a signal representing the average data of the two peripheral reference pixel samples selected individually by the selectors 118 and 119. Such average data, and the data of the subject pixel sample emerging from the SD circuit 111, are both supplied to a subtraction circuit 122. The residual data obtained from the circuit 122 is supplied to an absolute value circuit 123 so as to be converted into an absolute value. Subsequently, the output data from the absolute value circuit 123 is supplied to a comparator 124 in which it is compared with the threshold value TH obtained from a terminal 125.

The output data of the absolute value circuit 123 represents the predictive error ε generated when the value of the subject pixel sample is predicted from the average of the values of two peripheral pixel samples as described previously. If the predictive error ε is less than the threshold value TH, this signifies that the subject pixel sample may be thinned out. In this case, appropriate control data (which may comprise a single bit) indicating this status emerges from the comparator 124 (i.e. the bit emerging from comparator 124 is a binary "1"). If the predictive error ε exceeds the threshold value TH, this signifies that adequate interpolation is impossible on the receiving side, so that the control data from the comparator 124 is turned to binary "0". The control data thus obtained serves to execute on/off control of a gate circuit 126 which is supplied with the output data of the SD circuit 111. When the control data from the comparator 124 is "0", the gate circuit 126 is turned on so that the original data of the subject pixel sample is supplied to an output terminal 127. However, when the control data from the comparator 124 is "1", the gate circuit 126 is turned off so that the original data of the subject pixel sample is not supplied to the output terminal 127. The control data is also supplied to an output terminal 128, from which terminal it may be transferred together with the subsampled data of the pixel sample. That is, the output terminals 127 and 128 of the subsampling encoder 1 may be connected to a framing circuit (not shown in Figure 3) where the pixel sample data and the control data are combined with each other. This combined signal (consisting of nine bits per pixel) is transmitted to the output terminal 5 of Figure 2 when the pixel sample is not thinned out; but, when the pixel sample is thinned out, only the control data (one bit per pixel) is transmitted to the output terminal 5.

As described above, the subsampling is performed in accordance with whether or not the predictive error ε is greater than the threshold value TH for each subject pixel sample. In other words, data transmission or thinning-out is controlled, not on a block basis, but adaptively on the basis of each pixel sample, which is the minimum unit. In making a decision as to whether the thinning-out operation is performed or not in conformity with the predictive error ε, the actual data is used in place of interpolation data to consequently enable real-time processing without undesired repetition.

The construction of the predictive error filter 6 may be substantially the same as that of the subsampling encoder 1 as shown in Figure 3. However, since the function of the filter 6 is merely to generate the predictive error ε (corresponding to the output of the absolute value circuit 123 in Figure 3), the filter 6 will differ from the encoder 1 in that the comparator 124 and gate circuit 126 will be omitted from the filter 6.

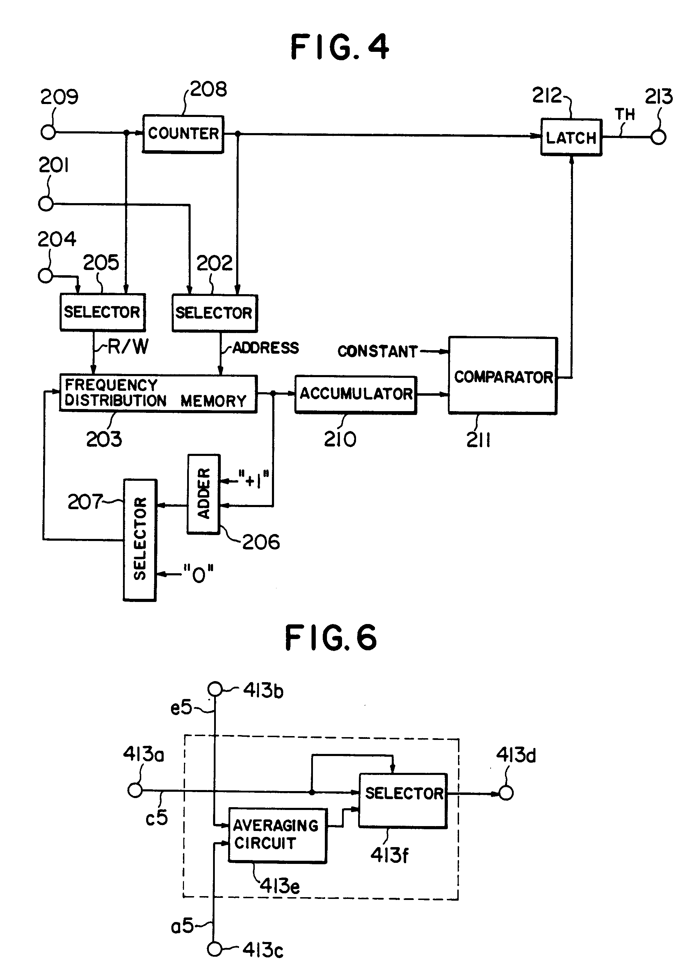

Next, the construction of the threshold determination circuit 2 will be described with reference to Figure 4.

Referring to Figure 4, an input terminal 201 is supplied with the predictive error ε obtained from the predictive error filter 6. The predictive error ε, when composed of 8 bits, may taken any value in the range from 0 to 255.

The predictive error ε is fed as an address signal to a frequency distribution memory 203 via a selector 202. Also, a sampling clock signal from an input terminal 204 is fed as a write/read signal to the memory 203 via a selector 205. In response to the write/read signal, the memory 203 operates in a read-modified-write mode to write the data immediately after reading it out with respect to the same address.

The frequency distribution memory 203 selectively receives, at an input terminal thereof, via a selector 207, either "0" or a value obtained by incrementing the output of the memory 203 by one in an adder 206.

To commence operation, the frequency distribution memory 203 is initialised so that its entire contents are set to zero. Then, when the predictive error ε is fed to the memory 203 as an address, the data (zero in the initial state) is read out and fed to the adder 206, where the value is incremented and then is rewritten in the same address. Thus, when the predictive errors ε are fed in during one field, pixel sample frequencies for producing the individual predictive errors ε are stored in the addresses 0 to 255 of the frequency distribution memory 203.

The threshold value TH is determined by using the frequency distribution table stored in the memory 203. The operation of determining the threshold value TH is executed within, for example, the vertical blanking interval. During such threshold determination, the content of a counter 208 is sequentially incremented from 0 to 255 in response to the clock signal from an input terminal 209 and is then fed as an address to the frequency distribution memory 203 via the selector 202.

The clock signal from the terminal 209 is fed as a read signal to the memory 203 via the selector 205. The numbers of pixel samples represented by the individual frequencies of the predictive errors ε stored in the frequency distribution memory 203 are read out and fed to an accumulator 210. Simultaneously, the selector 207 selects zero data, which is then written in the frequency distribution memory 203 to initialise it for processing the next field.

The accumulator 210 sequentially accumulates the frequencies of the predictive errors ε from 0 towards 255. The output value of the accumulator 210 is fed to a comparator 211, which is supplied with a required number of thinned-out pixel samples corresponding to a target rate, so that the output value of the accumulator 210 is compared with such required number. When the output value of the accumulator 210 has exceeded the required number of thinned-out pixel samples, a latch pulse is generated by the comparator 211.

The output signal of the counter 208, incremented from 0 towards 255, is fed to a latch circuit 212 and is thereby latched by the latch pulse generated by the comparator 211. Consequently, the value latched in the latch circuit 212 corresponds to the minimum of the predictive errors ε conforming with the required number of thinned-out pixel samples. The value thus obtained is taken out from an output terminal 213 as the threshold value TH of the subsampling encoder 1.

Since the frequency of the predictive error 0 includes elementary pixels as well as non-elementary pixels, the required number of thinned-out pixel samples is determined in consideration of such frequency.

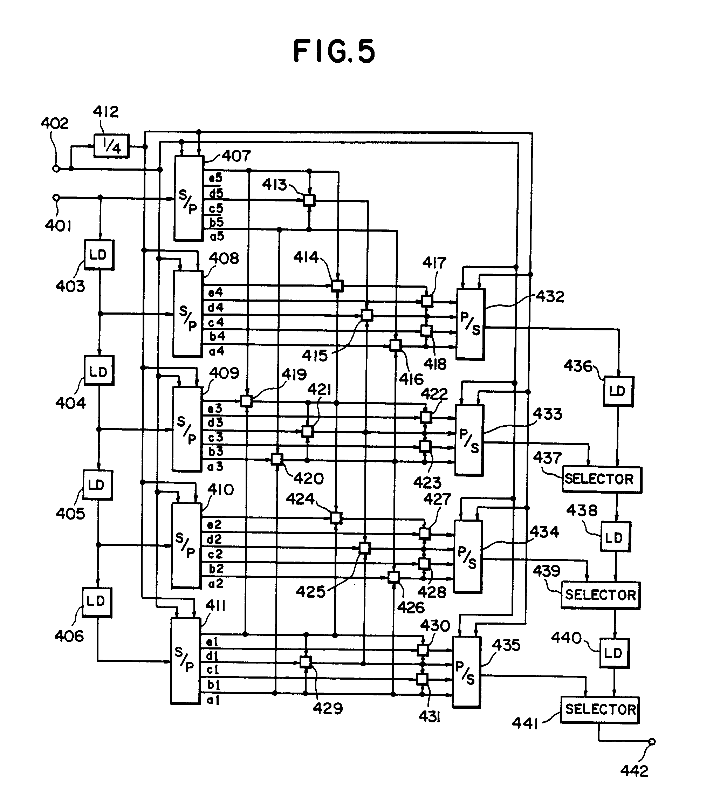

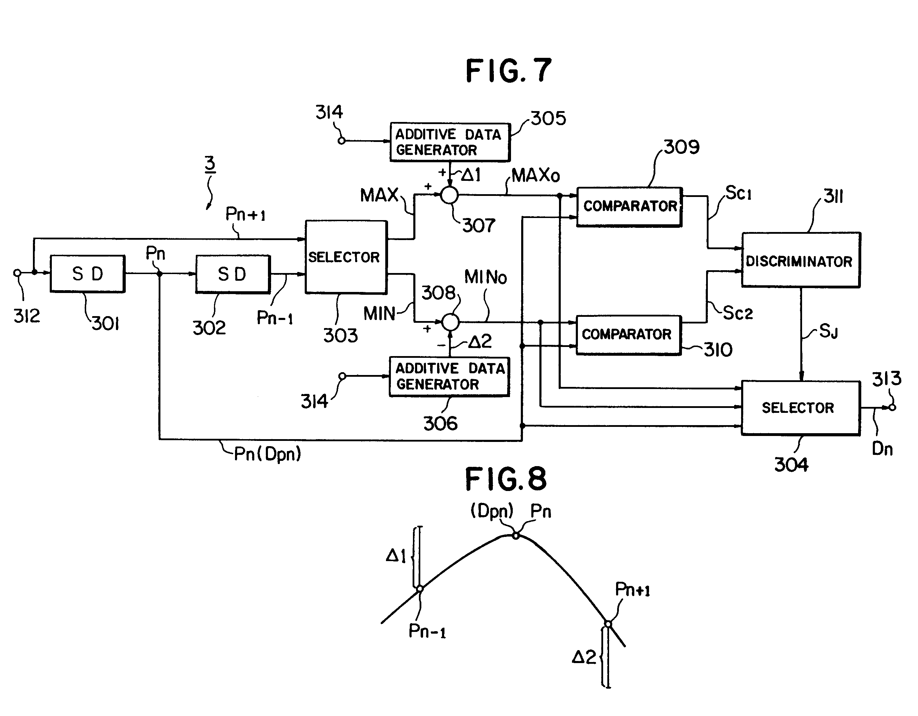

Prior to giving a description of the nonlinear filter 3, an apparatus for decoding the compressed video signal will be described with reference to Figures 5 and 6.

Figure 5 shows the circuit configuration of a subsampling decoder provided on the receiving side (the reproducing side in a recording/reproducing apparatus) of the encoding/decoding apparatus embodying the invention. Referring to Figure 5, an input terminal 401 is supplied with the compressive-encoded digital video signal, while an input terminal 402 is supplied with a sampling clock signal synchronised with the received data.

The input terminal 401 is connected in series to line delay ("LD") circuits 403, 404, 405 and 406. Serial-to-parallel (S/P) converters 407, 408, 409, 410 and 411 are connected to the input terminal 401 and to the outputs of the LD circuits 403, 404, 405, and 406, respectively. The data received from the terminal 401 and the delayed data outputted from the LD circuits 403 to 406 are sequentially fed into the S/P converters 407 to 411 in synchronism with the sampling clock signal, and the data of four pixel samples are latched by an output signal of a 1/4 frequency divider 412. Upon inputting of the data of the next pixel sample, each of the circuits 407 to 411 outputs the data of five pixel samples in parallel. Accordingly, at one timing instant, the twenty-five pixel samples having the reference signs a1 to e5 shown in Figure 1 are outputted respectively from the S/P converters 407 to 411. For instance, the data of the four pixel samples a1, b1, c1 and d1 from the LD circuit 406 are latched in the S/P converter 411, and the data of a total of five pixel samples, including the next pixel sample e1, emerge simultaneously from the S/P converter 411.

Of all twenty-five of the signals outputted from the S/P converters 407 to 411, the samples a5, b5, c5, d5, and e5, and e1, e2, e3, and e4 include peripheral reference pixel data used for interpolation, and the remaining sixteen pixels (the signals emerging from the circuits 407 to 411 other than such peripheral reference pixels) are subject samples to be interpolated. Interpolation circuits 413 to 431, connected as shown in Figure 5, are structurally identical. Figure 6 specifically shows the construction of the interpolation circuit 413 by way of example.

The interpolation circuit 413 has input terminals 413a, 413b, 413c and an output terminal 413d. The input terminal 413a is supplied with the data (including one-bit control data) for one subject pixel (e.g. c5) to be interpolated, while the input terminals 413b and 413c are supplied with the data of the peripheral reference pixel samples e5 and a5 required for interpolation. The pixel data from the input terminals 413b and 413c are fed to an averaging circuit 413e, which then produces an output signal for the average value interpolation. The pixel sample data from the input terminal 413a and an output signal of the averaging circuit 413e are fed to a selector 413f.

The selector 413f is controlled by the one-bit control data included in the pixel data from the input terminal 413a and, when the control data is "1" (representative of thinning out), the selector 413f selects the output of the averaging circuit 413e. When the control data is "0" (representative of transmission), the selector 413f selects the pixel sample data from the input terminal 413a. The output signal of the selector 413f is obtained at the output terminal 413d.

In the case when the subject pixel samples are thinned out, the interpolation values obtained from the interpolation circuits 413 to 431 are as follows:
Interpolation circuit 413: c5→1/2 (a5 + e5)
Interpolation circuit 414: e4→1/2 (e3 + e5)
Interpolation circuit 415: c4→1/2 (c3 + c5)
Interpolation circuit 416: a4→1/2 (a3 + a5)
Interpolation circuit 417: d4→1/2 (c4 + e4)
Interpolation circuit 418: b4→1/2 (a4 + c4)
Interpolation circuit 419: e3→1/2 (e1 + e5)
Interpolation circuit 420: a3→1/2 (a1 + a5)
Interpolation circuit 421: c3→1/2 (a3 + e3)
Interpolation circuit 422: d3→1/2 (c3 + e3)
Interpolation circuit 423: b3→1/2 (a3 + c3)
Interpolation circuit 424: e2→1/2 (e1 + e3)
Interpolation circuit 425: c2→1/2 (c1 + c3)
Interpolation circuit 426: a2→1/2 (a1 + a3)
Interpolation circuit 427: d2→1/2 (c2 + e2)
Interpolation circuit 428: b2→1/2 (a2 + c2)
Interpolation circuit 429: c1→1/2 (a1 + e1)
Interpolation circuit 430: d1→1/2 (c1 + e1)
Interpolation circuit 431: b1→1/2 (a1 + c1).

Referring again to Figure 5, the data of sixteen pixels included in the output signals from the interpolation circuits 413 to 431 are fed, respectively, to parallel-to-serial (P/S) converters 432, 433, 434 and 435 at a rate of four pixels on the same line. In the P/S converters 432 to 435, the four post-interpolation pixel data are latched by the output signal from the 1/4 frequency divider 412. Serial reproduced data are outputted from the P/S converters 432 to 435 synchronously with the sampling clock signal from the terminal 402. It will of course be clear that the pixel data shown in Figure 5 become different at the instant that the next clock signal is generated by the 1/4 frequency divider 412. That is, the individual pixel data a1, a2, a3, a4 and a5 from the S/P converters 407 to 411 are replaced with pixel data e1, e2, e3, e4 and e5, respectively.

The reproduced data from the P/S converter 432 are fed to an LD circuit 436, whose output data are then fed to a selector 437 together with the reproduced data obtained from the P/S converter 433. Subsequently, the output data of the selector 437 are fed to an LD circuit 438, whose output data are fed to a selector 439 together with the reproduced data from the P/S converter 434. Thereafter, the output data of the selector 439 are fed to an LD circuit 440, whose output data are then fed to a selector 441 together with the reproduced data from the P/S converter 435. The LD circuits 436, 438, 440 and the selectors 437, 439, 441 are provided for converting the sequence of the reproduced data to the same sequence executed in the television scanning, whereby reproduced data in the television scanning sequence are obtained at an output terminal 442 of the selector 441.

Next, the construction of the nonlinear filter 3 will be described with reference to Figure 7. The nonlinear filter 3 serves for the removal of noise, and principally comprises sample delay ("SD") circuits 301 and 302, selectors 303 and 304, additive data generators 305 and 306, an adder 307, a subtractor 308, comparators 309 and 310, and a discriminator 311. When a wave having polar values is formed in a one-dimensional scanning line (horizontal) direction by three consecutive sampling data as illustrated in Figure 8, the levels of the individual sampling data are compared with one another for selection, and one proper data is selectively outputted as replacement data.

The received digital video signal is fed to an input terminal 312, which is connected in series to the SD circuits 301 and 302. Each of the SD circuits 301 and 302 has a delay time equivalent to one sampling interval.

Suppose now that, as illustrated in Figure 8, one pixel Pn in the digital video signal is considered the subject pixel, and two pixels existing on the anterior and posterior peripheries of the subject pixel Pn are regarded here as peripheral reference pixels Pn-1 and Pn+1.

The subject pixel Pn and the peripheral reference pixels Pn-1, Pn+1 are extracted by the SD circuits 301 and 302. At the timing for feeding the peripheral reference pixel Pn+1 to the input terminal 312, the subject pixel Pn is obtained from the SD circuit 301 and the peripheral reference pixel Pn-1 is obtained from the SD circuit 302.

The selector 303 is supplied with both the input signal from the input terminal 312 and the output signal of the SD circuit 302. The selector 303 discriminates between the levels of the two input terminals, i.e. the data of the two peripheral reference pixels Pn-1 and Pn+1, and outputs the higher level signal as a maximal value MAX to the adder 307, while outputting the lower level signal as a minimal value MIN to the subtracter 308.

The additive data generator 305 is connected to the adder 307, which is inserted between the selector 303 and the comparator 309, while the additive data generator 306 is connected to the subtracter 308, which is inserted between the selector 303 and the comparator 310. The additive data generators 305 and 306 are provided for respectively changing the maximal value MAX and the minimal value MIN, which are outputted from the selector 303, in accordance with an offset signal fed from an input terminal 314. An offset △1 generated by the additive data generator 305 is added to the maximal value MAX by the adder 307 to produce a maximal value MAXo (= MAX + △1). Meanwhile, an offset △2 generated by the additive data generator 306 is subtracted from the minimal value MIN by the subtracter 308 to produce a minimal value MINo (= MIN - △2). Such two offsets △1 and Δ2 are constants changed in proportion to the sampling density.

The output signal (i.e. maximal value MAXo) of the adder 307 is fed to one input terminal of the comparator 309 and also to a first input terminal of the selector 304. The output signal (i.e. minimal value MINo) of the subtracter 308 is fed to one input terminal of the comparator 310 and also to a second input terminal of the selector 304.

Meanwhile, the output signal (ie. data Dpn of the subject pixel Pn) of the SD circuit 301 is fed to other input terminals of the comparators 309, 310 and also to a third input terminal of the selector 304.

In the comparator 309, the pixel data selected as the maximal value MAXo of the peripheral reference pixels Pn-1 and Pn+1 is compared with the subject pixel data Dpn outputted as a comparative value from the SD circuit 301, and the numerical relationship between the two compared data is fed as a comparison signal Sc1 to the discriminator 311.

In the comparator 310, the pixel data selected as the minimal value MINo out of the peripheral reference pixels Pn-1 and Pn+1 is compared with the subject pixel data Dpn outputted as a comparative value from the SD circuit 301, and the numerical relationship between the two compared data is fed as a comparison signal Sc2 to the discriminator 311. Since the maximal value MAXo and the minimal value MINo include the offsets △1 and △2 added thereto respectively, it follows that the subject pixel data Dpn is weighted in the comparators 309 and 310.

On the basis of the comparison signals Sc1 and Sc2, the discriminator 311 decides the overall numerical relationship between the maximal value MAXo, the minimal value MINo and the subject pixel data Dpn, and produces a two-bit decision signal SJ for selecting the value of the intermediate level (hereinafter referred to as the intermediate value).

In selection of the intermediate value, it is necessary to take into consideration the presence or absence of any noise that may be superimposed on the subject pixel data Dpn.

For instance, when the subject pixel Pn is free from the harmful influence of impulsive noise, it is highly probable that the data level of the subject pixel Pn is within a range between the maximal value MAXo and the minimal value MINo. However, if any significant noise is superimposed on the subject pixel Pn, there is a high probability that the data level thereof will be out of the range between the maximal value MAXo and the minimal value MINo.

If the data level of the subject pixel Pn is within the range between the maximal value MAXo and the minimal value MINo, harmful influence of the noise is considered to be negligible and, therefore, the subject pixel data Dpn is outputted as it is. However, if the subject pixel data Dpn is outside of the range between the maximal value MAXo and the minimal value MINo, it is assumed that significant noise is superimposed thereon, so that the subject pixel data Dpn needs to be replaced with other data.

In this case, considering the Gaussian distribution characteristics of the noise, it is appropriate that when the subject pixel data Dpn exceeds the maximal value MAXo, the data Dpn is replaced with the maximal value MAXo; and when the subject pixel data Dpn is less than the minimal value MINo, the data Dpn is replaced with the minimal value MINo.

The comparison signals Sc1 and Sc2 outputted from the comparators 309 and 310 respectively are as follows:
(a) If subject pixel data Dpn > maximal value MAXo, the comparison signals become Sc1 = "1" and Sc2 = "1" to consequently form a decision signal SJ (= 01) for selection of the maximal value MAXo;
(b) If maximal value MAXo ≧ subject pixel data Dpn ≧ minimal value MINo, the comparison signals become Sc1 = "0" and Sc2 = "1" to consequently form a decision signal SJ (= 11) for selection of the subject pixel data Dpn;
(c) If minimal value MINo > subject pixel data Dpn, the comparison signals become Sc1 = "0" and Sc2 = "0" to consequently form a decision signal SJ (= 10) for selection of the minimal value MINo.

Accordingly, the selector 304 is controlled by the decision signal SJ, and the intermediate values of the three signals are selectively produced as replacement data Dn at an output terminal 313.

Thus, the subject pixel Pn is replaced with data having an intermediate value equal to the maximal value MAXo, the subject pixel data Dpn, or the minimal value MINo. Even if significant noise is superimposed on the subject pixel Pn and the sampling density is low, the subject pixel Pn can be replaced with suitable data obtained by respectively adding the offset △1 to the maximal value MAX, and subtracting the offset △2 from the minimal value MIN, so that it becomes possible to remove the noise adaptively without deteriorating resolution, thereby achieving high-fidelity reproduction of the original image.

In the embodiment described above, the offsets Δ1 and Δ2 are added to and subtracted from the maximal value MAX and the minimal value MIN, respectively, by means of the adder 307 and the subtracter 308. However, such adjustment may alternatively be executed by employing a combined adder-subtracter. Furthermore, addition (and subtraction) of the offsets may not be needed in some cases.

Although in the above embodiment the one-dimensional filter is composed in the horizontal line direction, it may alternatively be composed in the vertical direction by replacing sample delay with line delay. It is also possible to construct the filter as a horizontal and vertical combination.

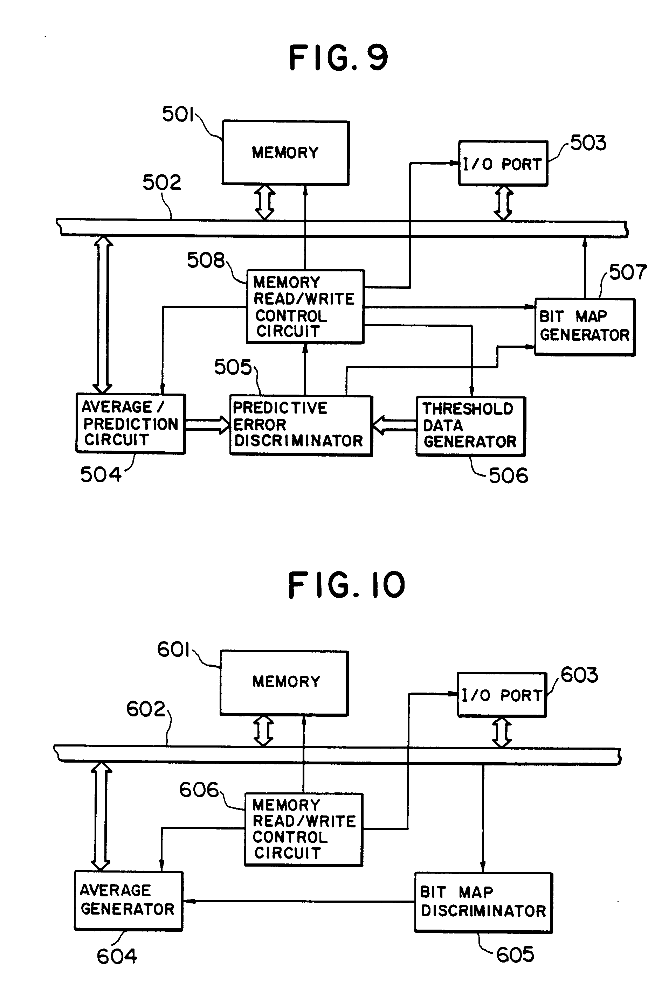

Another video signal compressive encoding/decoding method and apparatus embodying the invention will now be described with reference to Figures 9 to 12.

Figure 9 shows an alternative embodiment of the encoder, wherein pixel data and a bit map are stored in a memory 501. The memory 501 may be a random access memory (RAM). Data is transferred between a data bus 502 and an external unit via an input/output (I/O) port 503. An average/prediction circuit 504 generates an average value of two selected peripheral reference pixel samples and also generates predictive error between the average value and the value of a subject pixel sample. The predictive error obtained from the circuit 504 is fed to a predictive error discriminator 505, in which a decision is made as to whether the predictive error is or is not greater than a threshold value fed thereto from a threshold data generator circuit 506. A bit map generator circuit 507 generates a bit map which becomes "0" or "1" depending upon whether the predictive error is smaller or greater than the threshold value. The bit map thus produced is stored in the memory 501 via the data bus 502.

A memory read/write (R/W) control circuit 508 is provided for controlling both write and read operations. The memory 501, I/O port 503, average/prediction circuit 504, threshold data generator circuit 506 and bit map generator circuit 507 are controlled by the memory R/W control circuit 508.

In the Figure 9 embodiment, when "0" is transmitted as the bit map, the value of the subject pixel sample is replaced with the average value and the data of the subject pixel sample therefore is not transmitted. On the other hand, when "1" is transmitted as the bit map, the data of the subject pixel sample is transmitted. Thus, the variable density subsampling is performed in such a manner that transmission of the subject pixel sample data is determined under control in accordance with the numerical value of the predictive error.

Figure 10 shows an alternative embodiment of the decoder, wherein the pixel sample data and the bit map received from an I/O port 603 via a data bus 602 are stored in a memory 601. When the bit in the bit map is "1", the received subject pixel sample data is used directly without modification. On the other hand, when such bit is "0", the value of the received subject pixel sample is interpolated with an average data signal obtained from an average generator circuit 604. A bit map discriminator 605 checks the bit map and makes a decision as to whether the bit corresponding to the subject pixel to be processed is "1" or "0". The memory 601, I/O port 603, and average generator circuit 604 are controlled by a memory R/W control circuit 606.

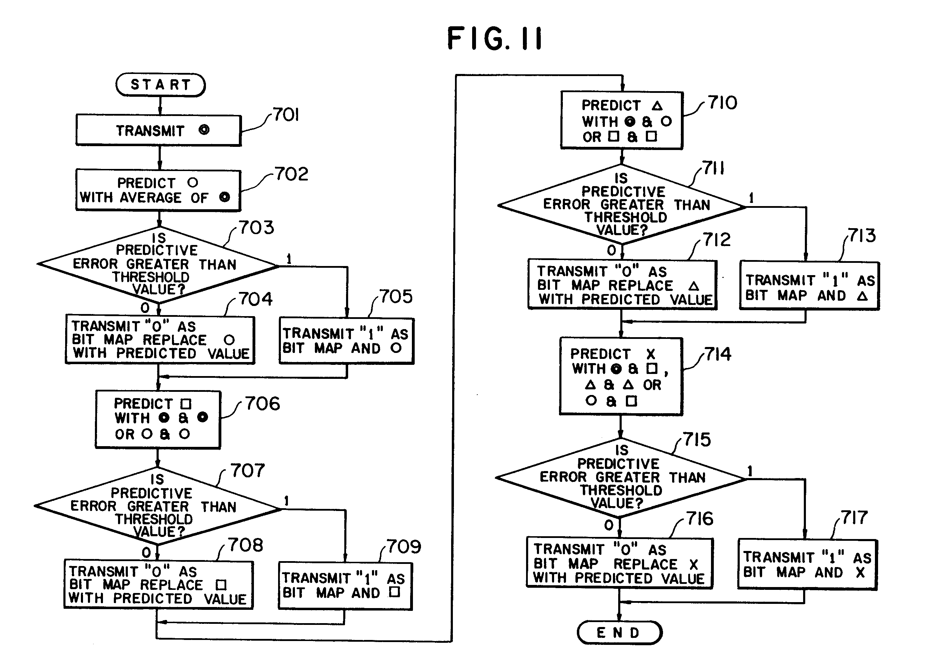

The operation of the encoder will now be described with reference to the flow chart of Figure 11. First, the data of the elementary pixel samples denoted by Ⓞ are transmitted in their entirety (step 701). Then, the data of each subject pixel ○ is predicted from the average value of the two upper and lower reference pixel samples Ⓞ spaced apart by two lines vertically from each other (step 702). A judgement is then made as to whether the predictive error is greater or smaller than the threshold value (step 703). When the predictive error is smaller than the threshold value, "0" is transmitted as a bit map, so that the original data of the subject pixel sample is replaced with the predicted value, e.g. average value, instead of being transmitted (step 704). If the predictive error exceeds the threshold value, "1" is transmitted as the bit map and therefore the original data of the subject pixel sample is transmitted (step 705).

Subsequently, the data of each subject pixel sample denoted by □ is predicted from the average value of two peripheral reference pixel samples Ⓞ or ○ spaced apart by two pixel samples horizontally from each other (step 706). Then, in the next step 707, a judgement is made as to whether the predictive error is greater or smaller than the threshold value. When the predictive error is smaller than the threshold value, "0" is transmitted as the bit map, so that the original data of the subject pixel sample is replaced with the predicted value instead of being transmitted (step 708). If, instead, the predictive error exceeds the threshold value, "1" is transmitted as the bit map and therefore the original data of the subject pixel sample is transmitted (step 709).

Subsequently, the data of each subject pixel sample △ is predicted from the average value of two peripheral reference pixel samples Ⓞ - ○ or □ - □ positioned in upper and lower lines (step 710). In the next step 711, a judgement is made as to whether the predictive error is greater or smaller than the threshold value. When the predictive error is smaller, "0" is transmitted as the bit map, so that the original data of the subject pixel sample is replaced with the predicted value instead of being transmitted (step 712). If the predictive error is greater, "1" is transmitted as the bit map and therefore the original data of the subject pixel sample is transmitted (step 713).

Then, the data of each subject pixel data denoted by x is predicted from the average value of two peripheral reference pixels ○ - □, △ - △, or ○ - □ positioned at left and right sample points (step 714). A judgement as to whether the predictive error is greater or smaller than the threshold value is made in a step 715. When the predictive error is smaller, "0" is transmitted as the bit map, so that the original data of the subject pixel sample is replaced with the average value instead of being transmitted (step 716). If the predictive error is greater, "1" is transmitted as the bit map and therefore the original data of the subject pixel sample is transmitted (step 717).

As described above, the vertical and horizontal compressions are alternately repeated and the interval is reduced by half in each compression, whereby the process is executed sequentially from rough or low-density subsampling to fine or high-density subsampling.

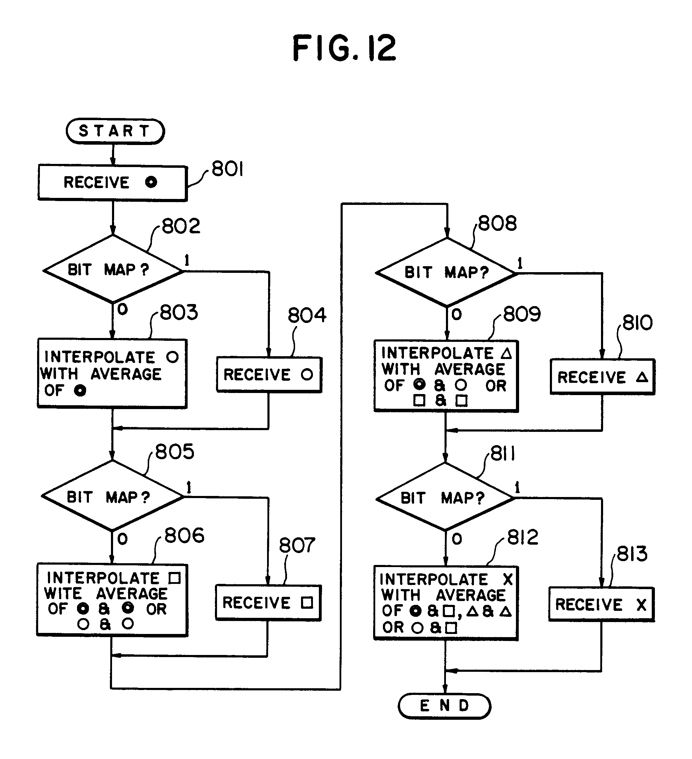

The operation of the decoder provided on the receiving side will now be described with reference to the flow chart of Figure 12. In the decoder, the data of the elementary pixel sample is initially received (step 801). Then, the bit map is checked and a decision is made as to whether the bit corresponding to a subject pixel sample ○ is "0" or "1" (step 802). When the bit is "0", the data of the elementary pixel sample Ⓞ is interpolated with the vertical average value of the data of the elementary pixel samples Ⓞ (step 803). However, if the bit is "1", the received data of the subject pixel sample ○ is used directly (step 804).

Subsequently, the bit map is checked and a decision is made as to whether the bit corresponding to a subject pixel sample □ is "0" or "1" (step 805). When the bit is "0", the data of the subject pixel sample □ is interpolated with the average value of the data of two horizontally peripheral reference pixel samples combined as Ⓞ - Ⓞ or ○ - ○ (step 806). If the bit is "1", the received data of the subject pixel sample □ is directly used (step 807).

Next, the bit map is checked in a step 808, and a decision is made as to whether the bit corresponding to a subject pixel sample is "0" or "1". When the bit is "0", the data of the subject pixel sample △ is interpolated with the average value of the data of two vertically peripheral reference pixel samples combined as Ⓞ - ○, or □ - □ (step 809). If the bit is "1", the received data of the subject pixel sample △ is directly used (step 810).

In the next step 811, the bit map is checked and a decision is made as to whether the bit corresponding to a subject pixel sample X is "0" or "1". When the bit is "0", the subject pixel data X is interpolated with the average value of the data of two horizontally peripheral reference pixel samples combined as Ⓞ - □, △ - △, or ○ - □ (step 812). However, if the bit is "1", the received data of the subject pixel sample X is directly used (step 813).

Comparing the second embodiment (described with reference Figures 9 to 12) with the first embodiment (described with reference to Figures 3 to 6), the hardware scale becomes larger, due to the need for a one field (or one frame) memory in the second embodiment, and the required processing time is rendered longer, so that the second embodiment is not best suited for still-image processing. However, since the value of each pixel sample to be thinned out is replaced with the predicted value, the advantage is achieved that the accumulation of the predictive errors can be reduced in the case of prediction using such pixel sample.

The stepwise encoding realises a sequential display changeable from a rough image to a fine image without the need for data rearrangement. Furthermore, due to the repeated processing of locally convergent patterns, the problem of error propagation occurring in differential pulse code modulation (DPCM) is minimised.

The results of exemplary simulations obtained by the above-described embodiments of the invention are listed below:

| | Compression rate % | Signal to Noise (SN) ratio (dB) |
|---|---|---|
| Flesh colour chart | 24.7 | 44.0 |
| Woman with headband | 42.6 | 44.0 |
| Weather forecast | 37.1 | 45.2 |
| Swiss landscape | 62.1 | 45.7 |
| Tulip | 77.5 | 45.4 |
| Robot | 50.1 | 44.0 |

As will be understood from the results of the simulations listed above, a remarkably high signal-to-noise ratio of 44 to 45 dB is achieved to ensure a satisfactory quality of the reproduced image, and the compression rate is also enhanced.

In the embodiments described hereinabove, the prediction mode is not limited to the average value alone: any other suitable mode may be employed as an alternative.

As well as the above-described examples where the pixel samples are either transmitted or thinned out, a similar effect is also attainable by, instead of thinning out the pixel samples, reducing the number of the bits thereof and transmitting merely the high-order bits alone.

Furthermore, the intervals of the elementary pixels may be changed in accordance with the image.

It will of course be clear that, in the second embodiment also, removal of noise may be executed by the use of nonlinear filter.

It is also possible to gather the flag data only and to encode them in a run-length code such as is employed in a facsimile transmission field.

## Claims

1. A method for compressive encoding of a video signal, the method comprising the steps of:
receiving a digital video signal represented by respective pixel samples (Ⓞ, ○, □, △, X) each having a predetermined number of bits;
determining respective elementary pixel samples (Ⓞ) at a predetermined rate;
predicting (702, 706, 710, 714) values of respective ones of subject pixel samples (○, □, △, X) other than the elementary pixel samples (Ⓞ);
detecting respective predictive errors (ε) of the predicted values from the present values of the subject pixel samples (○, □, △, x); and
transmitting (701) the present values of the elementary pixel samples (Ⓞ) in an encoded video signal;
the method being characterised by the steps of:
comparing (703, 707, 711, 715) the respective predictive errors (ε) with a threshold value (TH);
setting (704, 705, 708, 709, 712, 713, 716, 717) respective flags according to whether the predictive errors (ε) are determined to be greater than the threshold value (TH) or less than or equal to the threshold value (TH); and
transmitting (704, 705, 708, 709, 712, 713, 716, 717) in the encoded video signal the present values of the subject pixel samples (○, □, △, X) for which the respective predictive errors (ε) are greater than the threshold value (TH), and a compressed data signal for each subject pixel sample (○, □, △, X) for which the respective predictive error (ε) is less than or equal to the threshold value (TH), each of said compressed data signals including at least the said respective flag.

2. A method of decoding a video signal encoded by a method according to claim 1, comprising the steps of:
receiving the transmitted encoded video signal;
predicting (803, 806, 809) a subject pixel sample value for each of said compressed data signals;
interpolating (806, 809, 812) the respective subject pixels (○, □, △, X) corresponding to the respective compressed data signals, with the respective subject pixel sample values predicted in the step of predicting; and
outputting a decoded video signal including the present values of the elementary pixel samples (Ⓞ), the present values of the respective subject pixel samples included in the transmitted encoded video signal, and the respective subject pixel samples interpolated in the step of interpolating.

3. Apparatus for compressive encoding of a video signal, the apparatus comprising:
means (4) for receiving a digital video signal represented by respective pixel samples (Ⓞ, ○, □, △, X) each having a predetermined number of bits;
means (118, 119) for determining respective elementary pixel samples (Ⓞ) at a predetermined rate;
means (121) for predicting values of respective ones of subject pixel samples (○, □, △, X) other than the elementary pixel samples (Ⓞ);
means (122, 123) for detecting respective predictive errors (ε) of the predicted values from the present values of the subject pixel samples (○, □, △, X); and
means (126, 127) for transmitting the present values of the elementary pixel samples (Ⓞ) in an encoded video signal;
the apparatus being characterised by:
means (124, 125) for comparing the respective predictive errors (ε) with a threshold value (TH);
means (124) for setting respective flags according to whether the predictive errors (ε) are determined to be greater than the threshold value (TH) or less than or equal to the threshold value (TH); and
means (126, 127, 128) for transmitting in the encoded video signal the present values of the subject pixel samples (○, □, △, X) for which the respective predictive errors are greater than the threshold value (TH), and a compressed data signal for each subject pixel sample (○, □, △, X) for which the respective predictive error is less than or equal to the threshold value (TH), each of said compressed data signals including at least the said respective flag.

4. Apparatus for decoding a video signal encoded by apparatus according to claim 3, the decoding apparatus comprising:
means (603) for receiving the transmitted encoded video signal;
means (601, 604) for predicting a subject pixel sample value for each of said compressed data signals;
means (604) for interpolating the respective subject pixels (○, □, △, X) corresponding to the respective compressed data signals, with the respective subject pixel sample values predicted in said means for predicting; and
means (603, 606) for outputting a decoded video signal including the present values of the elementary pixel samples (ⓞ), the present values of the respective subject pixel samples included in the transmitted encoded video signal, and the respective subject pixel samples interpolated in said means for interpolating.

## Patentansprüche

1. Verfahren zur Kompressionskodierung eines Videosignals, mit den Schritten:
Empfangen eines digitalen Videosignals, das durch jeweilige Pixelsamples (Ⓞ, ○, □, △, X) dargestellt ist, deren jedes eine vorbestimmte Zahl Bits aufweist,
Bestimmen jeweiliger elementarer Pixelsamples (Ⓞ) mit einer vorbestimmten Rate,
Vorausbestimmen (702, 706, 710, 714) von Werten jeweiliger Subjektpixelsamples (○, □, △, X), die anders als die elementaren Pixelsamples (Ⓞ) sind,
Detektieren von vorausbestimmbaren Fehlern (ε) der vorausbestimmten Werte aus den vorliegenden Werten der Subjektpixelsamples (○, □, △, X) und
Übertragen (701) der vorliegenden Werte der elementaren Pixelsamples (Ⓞ) in einem kodierten Videosignal,
**gekennzeichnet durch** die Schritte Vergleichen (703, 707, 711, 715) der jeweiligen vorausbestimmbaren Fehler (ε) mit einem Schwellenwert (TH),
Setzen (704, 705, 708, 709, 712, 713, 716, 717) jeweiliger Kennzeichen in Abhängigkeit davon, ob die vorausbestimmbaren Fehler (ε) als größer als der Schwellenwert (TH) oder als kleiner oder gleich dem Schwellenwert (TH) bestimmt werden, und
Übertragen (704, 705, 708, 709, 712, 713, 716, 717) in dem kodierten Videosignal die vorliegenden Werte der Subjektpixelsamples (○, □, △, X), bei welchen die jeweiligen vorausbestimmbaren Fehler (ε) größer als der Schwellenwert (TH) sind, und pro Subjektpixelsample (○, □, △, X), bei welchem der jeweilige vorausbestimmbare Fehler (ε) kleiner oder gleich dem Schwellenwert (TH) ist, ein komprimiertes Datensignal, wobei jedes der komprimierten Datensignale wenigstens das jeweilige Kennzeichen enthält.

2. Verfahren zum Dekodieren eines durch ein Verfahren nach Anspruch 1 kodierten Videosignals, bestehend aus den Schritten:
Empfangen des übertragenen kodierten Videosignals,
Vorausbestimmen (803, 806, 809) eines Subjektpixelsamplewertes pro komprimiertem Datensignal,
Interpolieren (806, 809, 812) der mit den jeweiligen komprimierten Datensignalen korrespondierenden jeweiligen Subjektpixel (○, □, △, X) wobei die jeweiligen Subjektpixelsamplewerte beim Schritt des Vorausbestimmens vorherbestimmt werden, und
Ausgeben eines dekodierten Videosignals, welches die vorliegenden Werte der elementaren Pixelsamples (Ⓞ), die in dem übertragenen kodierten Videosignal enthaltenen vorliegenden Werte der jeweiligen Subjektpixelsamples und die beim Schritt des Interpolierens interpolierten jeweiligen Subjektpixelsamples enthält.

3. Vorrichtung zur Kompressionskodierung eines Videosignals, bestehend aus:
einer Einrichtung (4) zum Empfang eines digitalen Videosignals, das durch jeweilige Pixelsamples (Ⓞ, ○, □, △, X), deren jedes eine vorbestimmte Anzahl Bits aufweist, dargestellt ist,
einer Einrichtung (118, 119) zur Bestimmung jeweiliger elementarer Pixelsamples (Ⓞ) mit einer vorbestimmten Rate,
einer Einrichtung (212) zur Vorausbestimmung von Werten jeweiliger Subjektpixelsamples (○, □, △, X), die anders als die elementaren Pixelsamples(Ⓞ) sind,
einer Einrichtung (122, 123) zur Detektion jeweiliger vorausbestimmbarer Fehler (ε), der vorausbestimmten Werte aus den vorliegenden Werten der Subjektpixelsamples (○, □, △, X), und
einer Einrichtung (126, 127) zur Übertragung der vorliegenden Werte der elementaren Pixelsamples (Ⓞ) in einem kodierten Videosignal,
**gekennzeichnet durch**
eine Einrichtung (124, 125) zum Vergleich der jeweiligen vorausbestimmbaren Fehler (ε) mit einem Schwellenwert (TH),
eine Einrichtung (124) zum Setzen jeweiliger Kennzeichen in Abhängigkeit davon, ob die vorausbestimmbaren Fehler (ε) als größer als der Schwellenwert (TH) oder kleiner oder gleich dem Schwellenwert (TH) bestimmt sind,
eine Einrichtung (126, 127, 128) zur Übertragung im kodierten Videosignal die Werte der vorliegenden Werte der Subjektpixelsamples (○, □, △, X), bei welchen die jeweiligen vorausbestimmbaren Fehler größer als der Schwellenwert (TH) sind, und pro Subjektpixelsample (○, □, △, X), bei welchem der jeweilige vorausbestimmbare Fehler kleiner oder gleich dem Schwellenwert (TH) ist, ein komprimiertes Datensignal, wobei jedes der komprimierten Datensignale wenigstens das jeweilige Kennzeichen enthält.

4. Vorrichtung zur Dekodierung eines durch eine Vorrichtung nach Anspruch 3 kodierten Videosignals, bestehend aus:
einer Einrichtung (603) zum Empfang des übertragenen kodierten Videosignals,
einer Einrichtung (601, 604) zur Vorausbestimmung eines Subjektpixelsamples pro komprimiertem Datensignal,
einer Einrichtung (604) zur Interpolation der mit den jeweiligen komprimierten Datensignalen korrespondierenden jeweiligen Subjektpixelsamples (○, □, △, X), wobei die jeweiligen Subjektpixelsamplewerte in der Einrichtung zur Vorausbestimmung vorherbestimmt sind, und
einer Einrichtung (603, 606) zur Ausgabe eines dekodierten Videosignals, das die vorliegenden Werte der elementaren Pixelsamples (Ⓞ), die vorliegenden Werte der in dem übertragenen kodierten Videosignal enthaltenen jeweiligen Subjektpixelsamples und die in der Einrichtung zur Interpolation interpolierten jeweiligen Subjektpixelsamples enthält.

## Revendications

1. Procédé de codage par compression d'un signal vidéo, le procédé comprenant les étapes de :
réception d'un signal vidéo numérique représenté par des échantillons de pixel respectifs (Ⓞ, ○, □, △, X), chacun comportant un nombre prédéterminé de bits ;
détermination d'échantillons de pixel élémentaires respectifs (Ⓞ) selon une fréquence prédéterminée ;
prédiction (702, 706, 710, 714) de valeurs de certains respectifs des échantillons de pixel concernés (○, □, △, X) autres que les échantillons de pixel élémentaires (Ⓞ) ;
détection d'erreurs de prédiction respectives (ε) des valeurs prédites par rapport aux valeurs courantes des échantillons de pixel concernés (○, □, △, X) ; et
émission (701) des valeurs courantes des échantillons de pixel élémentaires (Ⓞ) dans un signal vidéo codé,
le procédé étant caractérisé par les étapes de :
comparaison (703, 707, 711, 715) des erreurs de prédiction respectives (ε) à une valeur de seuil (TH) ;
établissement (704, 705, 708, 709, 712, 713, 716, 717) d'indicateurs respectifs selon que les erreurs de prédiction (ε) sont déterminées comme étant supérieures à la valeur de seuil (TH) ou comme étant inférieures ou égales à la valeur de seuil (TH) ; et
émission (704, 705, 708, 709, 712, 713, 716, 717) dans le signal vidéo codé des valeurs courantes des échantillons de pixel concernés (○, □, △, X) pour lesquels des erreurs de prédiction respectives (ε) sont supérieures à la valeur de seuil (TH), et d'un signal de données comprimées pour chaque échantillon de pixel concerné (○, □, △, X) pour lequel l'erreur de prédiction respective (ε) est inférieure ou égale à la valeur de seuil (TH), chacun desdits signaux de données comprimées incluant au moins lesdits indicateurs respectifs.

2. Procédé de décodage d'un signal vidéo codé au moyen d'un procédé selon la revendication 1, comprenant les étapes de :
réception du signal vidéo codé émis ;
prédiction (803, 806, 809) d'une valeur d'échantillon de pixel concernée pour chacun desdits signaux de données comprimées ;
interpolation (806, 809, 812) des pixels concernés respectifs (○, □, △, X) correspondant aux signaux de données comprimées respectifs, à l'aide des valeurs d'échantillon de pixel concernées respectives prédites au niveau de l'étape de prédiction ; et
émission en sortie d'un signal vidéo décodé incluant les valeurs courantes des échantillons de pixel élémentaires (Ⓞ), les valeurs courantes des échantillons de pixel concernés respectifs inclus dans le signal vidéo codé émis et des échantillons de pixel concernés respectifs interpolés lors de l'étape d'interpolation.

3. Appareil de codage par compression d'un signal vidéo, l'appareil comprenant :
un moyen (4) pour recevoir un signal vidéo numérique représenté par des échantillons de pixel respectifs (Ⓞ, ○, □, △, X), chacun comportant un nombre prédéterminé de bits ;
un moyen (118, 119) pour déterminer des échantillons de pixel élémentaires respectifs (Ⓞ) selon une fréquence prédéterminée ;
un moyen (121) pour prédire des valeurs de certains respectifs des échantillons de pixel concernés (○, □, △, X) autres que les échantillons de pixel élémentaires (Ⓞ) ;
un moyen (122, 123) pour détecter des erreurs de prédiction respectives (ε) des valeurs prédites à partir des valeurs courantes des échantillons de pixel concerné (○, □, △, X) ; et
un moyen (126, 127) pour émettre les valeurs courantes des échantillons de pixel élémentaires (Ⓞ) dans un signal vidéo codé,
l'appareil étant caractérisé par :
un moyen (124, 125) pour comparer les erreurs de prédiction respectives (ε) à une valeur de seuil (TH) ;
un moyen (124) pour établir des indicateurs respectifs selon que les erreurs de prédiction (ε) sont déterminées comme étant supérieures à la valeur de seuil (TH) ou comme étant inférieures ou égales à la valeur de seuil (TH) ; et
un moyen (126, 127, 128) pour émettre dans le signal vidéo codé les valeurs courantes des échantillons de pixel concernés (○, □, △, X) pour lesquels les erreurs de prédiction respectives sont supérieures à la valeur de seuil (TH), et un signal de données comprimées pour chaque échantillon de pixel concerné (○, □, △, X) pour lequel l'erreur de prédiction respective est inférieure ou égale à la valeur de seuil (TH), chacun desdits signaux de données comprimées incluant au moins ledit indicateur respectif.

4. Appareil de décodage d'un signal vidéo codé au moyen d'un appareil selon la revendication 3, l'appareil de décodage comprenant :
un moyen (603) pour recevoir le signal vidéo codé émis ;
un moyen (601 604) pour prédire une valeur d'échantillon de pixel courante pour chacun desdits signaux de données comprimées ;
un moyen (604) pour interpoler les pixels concernés respectifs (○, □, △, X) correspondant aux signaux de données comprimées respectifs, à l'aide des valeurs d'échantillons de pixel concernées respectives prédites dans ledit moyen de prédiction ; et
un moyen (603, 606) pour émettre en sortie un signal vidéo décodé incluant les valeurs courantes des échantillons de pixel élémentaires (Ⓞ), les valeurs courantes des échantillons de pixel concernés respectifs incluses dans le signal vidéo codé émis et les échantillons de pixel concernés respectifs interpolés dans ledit moyen d'interpolation.
